# EUROPEAN PATENT APPLICATION

(11) **EP 4 149 051 A1**
(43) Date of publication of application: **15.03.2023**
(21) Application number: 21195444.1
(22) Date of filing: 08.09.2021
(51) Int. Cl.: H04L 9/40, H04W 12/12, H04L 67/12

(54) **A TRACKING AND MANAGEMENT METHOD FOR RESPONDING TO A CYBER-ATTACK**

(71) Applicant: VOLVO TRUCK CORPORATION, 405 08 Göteborg (SE)
(72) Inventor: SUBRAMANIAN, Dhivya, Bangalore 560037 (IN); MALIK, Karandeep, Bangalore, Karnataka 560075 (IN)
(74) Representative: Germain Maureau

(57) **Abstract**

The invention relates to a device/method a tracking and management method for responding to a cyber-attack (2) directed to at least one attacked vehicle (1) of a fleet (3) including a plurality of vehicles (1), each vehicle (1) of the fleet (3) comprising an intrusion detection and prevention system (IDPS) configured to track data wirelessly received by said vehicle (1) for identifying the cyber-attack (2), the method comprising the following steps: identifying the cyber-attack (2) in said at least one attacked vehicle (1), the identification corresponding to the discovery, by the intrusion detection and prevention system (IDPS) of the at least one attacked vehicle (1), of at least one piece of malicious data among the wirelessly received data and the definition of a report update that characterizes said at least one piece of malicious data; broadcasting the report update to at least one non-attacked vehicle (1) of the fleet from the at least one attacked vehicle (1) according to a short range communication protocol (5).

## Description

### TECHNICAL FIELD

The invention relates to a tracking and management method for responding to a cyber-attack against one or more vehicles of a fleet. The invention can be applied to any fleet of vehicles connected with each other using short-range communication means. For instance, it can be a fleet of police cars, fire trucks, buses, mining trucks, cabs, ambulances and so on.

### BACKGROUND

It is known that all vehicles of a fleet can communicate with a central communication system via Internet. It enables the central system to monitor the fleet of vehicles and to exchange information with every vehicle in order to optimize the functioning of each vehicle.

In particular, a fleet of vehicles using a central system can be used in transport industry to coordinate the vehicles displacements, for example to transport loads or passengers.

A long range communication protocol, such as Internet, is used to link/connect each vehicle of the fleet to the central communication system. In order to exchange information with the central system, each vehicle comprises a management system including a long range communication module.

Each vehicle can thus be connected to an internet mobile network or a local Wi-Fi connection. This communication module is satisfying in that it can operate reliably over long distances and allows the vehicles and the central system to remain connected.

However, there is a risk that a cyber-attack can be launched against one or more vehicles of the fleet for taking control of their management systems and also of the central system.

Usually, as a protection means, each management system is equipped with a built-in intrusion detection and prevention system to control wirelessly exchanged data. Once a malicious data is detected, the concerned vehicle contends with it and informs the control system. Then, the control system can take measures to prevent the spreading of the cyber-attack on other vehicles.

A disadvantage of this method is that it becomes ineffective in areas where the attacked vehicle(s) has no access to the Internet. The present invention aims to solve all or some of the disadvantages mentioned above.

### SUMMARY

An object of the invention is to provide a method according to claim 1 for protecting a fleet of vehicles against cyber-attacks. Each attacked vehicle can directly inform a nearby vehicle according to a short range communication protocol without needing to use the long range communication protocol.

There are two main benefits of using the short range communication. The first advantage is that in areas like coal mines or tunnels where communicating with the central system through the long range communication protocol is usually not possible, because of lack of network signals, the communication to nearby vehicles can be established as they are in proximity. The second one being faster reaction thanks to report update from nearby vehicle.

In other words, the first vehicle of the fleet that is attacked establishes a report update characterising the cyber-attack. This report update is sent to any vehicle in proximity (i.e. within range) thanks to the short range communication protocol enabling a direct communication.

This provision is advantageous as broadcasting the report update to the nearby vehicles is a fast and efficient way to spread the report update. Even if the at least one attacked vehicle and the nearby vehicles are or get in an area isolated from long range communication networks, communication is still possible with the short range communication protocol. For example, a fleet of trucks can contend with cyber-attacks in coal mines.

According to an aspect of the invention, the step of broadcasting of the report update is realized according to a direct communication between two vehicles of the fleet.

The transmission of the report update realized according to the short range communication protocol is propagated/broadcasted from one vehicle to the other. This implies that the short range communication is faster and more reliable than a communication from long range communication networks.

According to an aspect of the invention, the fleet includes a central system configured to exchange data with said plurality of vehicles according to a long range communication protocol, the method comprising the following steps realized after the identification step of the cyber-attack by said at least one attacked vehicle :
sending the report update to the central system from the at least one attacked vehicle according to the long range communication protocol,
further sending the report update to the plurality of vehicles of the fleet from the central system according to the long range communication protocol.

There is a redundancy when dispatching the report update: the short range communication protocol enables a direct transmission to vehicles in proximity and the long range communication protocol enables a centralized communication to the plurality of vehicles.

If the attacked vehicle is in a location wherein the long range communication protocol does not work, the short range communication protocol is a means to inform a nearby vehicle about the cyber-attack to anticipate it.

Conversely, an isolated vehicle able to communicate with the central system can report about a cyber-attack and share the report update.

Communication can then be maintained according to both protocols when a cyber-attack is detected without increasing a risk of spreading the malicious data.

According to an aspect of the invention, the at least one attacked vehicle is configured to filter data intended to be sent to the central system and/or to at least one non-attacked vehicle so as to exclude the unaltered at least one piece of malicious data.

In order to avoid the cyber-attack from spreading through the central system, the information that is broadcasted by an attacked vehicle to the central system can be filtered so as not to transmit malicious data. The same filtering procedure can be realized for short range communication with nearby vehicles of the fleet.

According to an aspect of the invention, data wirelessly received originate from any wireless network the at least one attacked vehicle is adapted to be connected to.

Cyber-attacks can be launched when the computer system of the vehicle connects to any Wi-Fi network or connect to the internet using mobile data. In that situation, a cyber-attack can be launched directly to the vehicle without spreading to the central system or other vehicles.

In exceptional circumstances, at least one piece of malicious data may get transmitted to the at least one attacked vehicle via the short range communication protocol or the long range communication protocol.

In some cases, the at least one piece of malicious data can come from the central system. The tracking and management method is therefore also adapted in case a cyber-attack has infested the central system and tries to spread to the fleet.

Thus, the short range communication protocol is independent from the central system. It becomes advantageous for the vehicles of the fleet to communicate independently from the central system to share the report update.

According to an aspect of the invention, the intrusion detection and prevention system of each vehicle of the fleet is configured to spot and prioritize any report update received via the short range communication protocol for updating a prevention strategy of the intrusion detection and prevention system.

In other words, priority is given to the report update received from nearby vehicles via the short range communication protocol.

According to an aspect of the invention, data transmitted through the central system can still be considered to complete the prevention strategy implemented by other vehicles of the fleet.

Thus, communication with central network will get deprioritized over short range communication only if the centralized server or network was itself sending some update at the same time when the nearby vehicle is transmitting the report update through short range communication. The short-range communication gets priority over long range communication through central system. Communication through central system acts as a backup (in queue) to the information already transmitted directly through short range communication.

According to an aspect of the invention, any vehicle of the fleet having the report update realizes following steps:
- detecting a nearby vehicle according to the short range communication protocol configured to exchange information with said vehicle having the report update,
- broadcasting the information and it is up to the receiver to check if the report is same as any previous received report and discard it if it has been already received;
- sending the report update to the nearby vehicle according to the short range communication protocol.

The affected vehicle using short range communication broadcasts the report update and, so, it will reach to not just one specific vehicle, rather all of them that are accessible through short range communication. It is a broadcast. Therefore, the sequence of transmitting report from first vehicle to second vehicle and second to third will happen only if third vehicle is not reachable, through short range communication, directly from the first vehicle.

According to an aspect of the invention, the discovery of the at least one piece of malicious data is realized further to a detection of an abnormal resource usage and/or abnormal network activity of the at least one vehicle, the abnormality being statistically determined with respect to a resource usage baseline and/or network activity baseline.

Every attack, would try to either gain elevated privileges, do actions like changes in system configurations, try to push more messages than the system can handle and so on. Such a behaviour can be detected by the intrusion detection and prevention system as abnormal resource usage and/or abnormal network activity.

The intrusion detection and prevention system which is anomaly-based will monitor network traffic and compare it against an established baseline. The baseline will identify what is "normal" for that network activity and resource usage.

In particular, it concerns the bandwidth generally used. This method identifies deviations of protocol states by comparing observed events with pre-determined profiles of generally accepted definitions of benign activity.

According to an aspect of the invention, each vehicle of the fleet comprises a management system configured to manage electronic commands of the vehicle and including the intrusion detection and prevention system, a short range communication module and a long range communication module.

In particular, the management system includes a processor. The term resource usage concerns the activity of the management system and the term network activity concerns the information exchange thanks to the short range communication module and the long range communication module.

According to an aspect of the invention, the report update contains data related to the detected abnormality, said data including a trained machine learning model, a state machine information resulting of the cyber-attack and/or a list of IP addresses and ports from which the cyber-attack was launched.

The report update is meant to share the attack information with the other vehicles.

The report update would comprise of a trained Machine Learning model that can detect anomalous behaviour. The first vehicle can train a Machine Learning model to detect the attack in first vehicle and then send it to other vehicles to enable them to detect the same.

The report update would also contain a state machine information that is created by tracking the abnormal protocol states that were a result of attack and send that to other vehicles to detect the attack.

The report update would also contain a list of IP addresses and port from which attack was launched on the first vehicle and the system configurations that the attack leads to, and other information for easy detection of malicious data.

According to an aspect of the invention, the step of identifying the cyber-attack is followed by a protection step wherein the at least one attacked vehicle stops receiving at least a part of the data from where the cyber-attack is launched, modifies its security preferences with regards to wirelessly received data and/or inhibits the received malicious data.

The primary preventive actions could be to block the IP address that is sending malicious code to execute or carrying out manual attack or the other way around is to block the IP Port from which attack is being launched.

The intrusion detection and prevention system can also do changes to the security environment. The intrusion detection and prevention system can change the configuration of other security controls to disrupt an attack.

Common examples are the intrusion detection and prevention system reconfiguring a network firewall to block access from the attacker or to the target.

Some intrusion detection and prevention systems can even cause patches to be applied to a host if the intrusion detection and prevention system detects that the host has vulnerabilities. The intrusion detection and prevention system can also change the attack's content. Some intrusion detection and prevention system technologies can remove or replace malicious portions of an attack to make it benign.

An example would be an intrusion detection and prevention system that acts as a proxy and normalizes incoming requests, which means that the proxy repackages the payloads of the requests, discarding header information. This might cause certain attacks to be discarded as part of the normalization process.

According to an aspect of the invention, the protection step further includes a configuration of the at least one attacked vehicle in a limpo mode wherein displacement capabilities of the vehicle are limited.

The last resort, when all other mechanisms fail to block the attack, would be to put the vehicle in limpo mode i.e. reducing the vehicle to a low speed so that even if the attacker gains control of the vehicle, he/she cannot cause any accident.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a scheme of a fleet comprising a plurality of vehicles and a central system,
Fig. 2 is a diagram of the steps of a tracking and management method for responding to a cyber-attack, and
Fig. 3 is a scheme of a management system of a vehicle of the fleet.

### DETAILED DESCRIPTION OF EXAMPLE EMBODIMENTS OF THE INVENTION

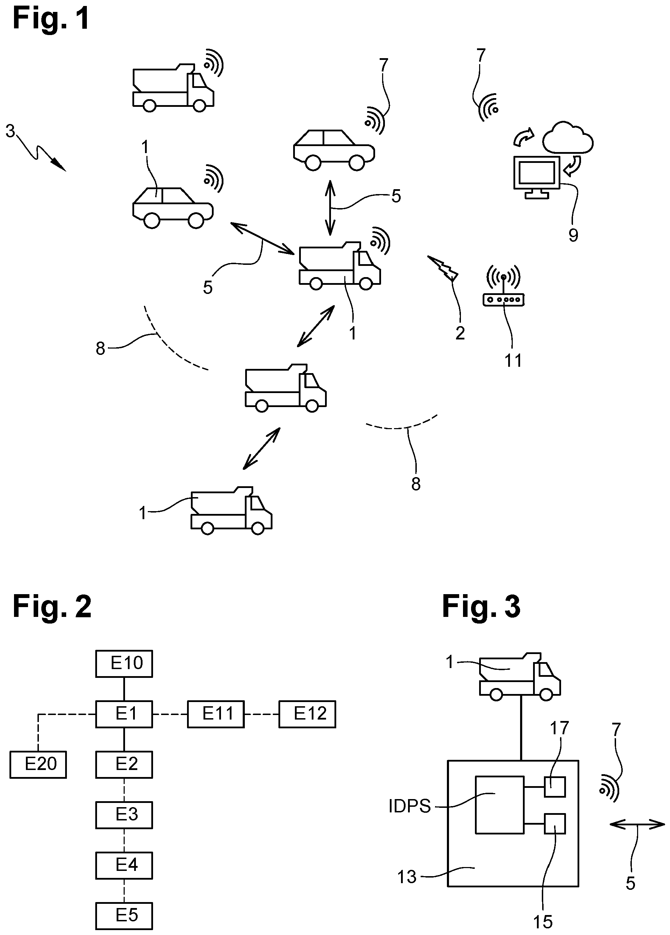

As illustrated in figures 1 and 2, there is a tracking and management method for responding to a cyber-attack 2 directed to at least one attacked vehicle 1 of a fleet 3 including a plurality of vehicles 1.

Each vehicle 1 of the fleet 3 comprises an intrusion detection and prevention system IDPS configured to track data wirelessly received by said vehicle 1 for identifying the cyber-attack 2.

The method comprises a step E1 of identifying the cyber-attack 2 in said at least one attacked vehicle 1. The identification corresponds to the discovery, by the intrusion detection and prevention system IDPS of the at least one attacked vehicle 1, of at least one piece of malicious data among the wirelessly received data and the definition of a report update that characterizes said at least one piece of malicious data.

Then, the method comprises a step E2 of broadcasting the report update to at least one non-attacked vehicle 1 of the fleet 3 from the at least one attacked vehicle 1 according to a short range communication protocol 5.

Each attacked vehicle 1 can directly inform a nearby vehicle 1 according to a short range communication protocol 5 without needing to use a long range communication protocol 7.

In other words, a first vehicle 1 of the fleet 3 that is attacked establishes a report update characterising the cyber-attack 2. This report update is sent to any vehicle 1 in proximity (i.e. within range 8) thanks to the short range communication protocol 5 enabling a direct communication.

Even if the at least one attacked vehicle 1 and the nearby vehicles 1 are or get in an area isolated from long range communication networks, communication is still possible with the short range communication protocol 5. For example, a fleet 3 of trucks can contend with cyber-attacks 2 in coal mines.

The step of transmission E2 of the report update is realized according to a direct communication between two vehicles of the fleet 1.

The transmission of the report update realized according to the short range communication protocol 5 is propagated from one vehicle 1 to the other. This implies that the short range communication is faster and more reliable than a communication from long range communication networks.

The fleet 3 includes a central system 9 configured to exchange data with said plurality of vehicles 1 according to the long range communication protocol 7. The method comprises the following steps realized after the identification step E1 of the cyber-attack by said at least one attacked vehicle 1 :
E11 sending the report update to the central system 9 from the at least one attacked vehicle 1 according to the long range communication protocol 7,
E12 further sending the report update to the plurality of vehicles 1 of the fleet 3 from the central system 9 according to the long range communication protocol 7.

There is a redundancy when dispatching the report update: the short range communication protocol 5 enables a direct transmission to vehicles 1 in proximity and the long range communication protocol 7 enables a centralized communication to the plurality of vehicles 1.

If the attacked vehicle 1 is in a location wherein the long range communication protocol 7 does not work, the short range communication protocol 5 is a means to inform a nearby vehicle 1 about the cyber-attack 2 to anticipate it.

Conversely, an isolated vehicle 1 able to communicate with the central system 9 can report about a cyber-attack 2 and share the report update.

Communication can then be maintained according to both protocols when a cyber-attack 2 is detected without increasing a risk of spreading the malicious data.

The at least one attacked vehicle 1 is configured to filter data intended to be sent to the central system 9 and/or to at least one non-attacked vehicle 1 so as to exclude the unaltered at least one piece of malicious data.

In order to avoid the cyber-attack 2 from spreading through the central system 9, the information that is broadcasted by an attacked vehicle 1 to the central system 9 can be filtered so as not to transmit malicious data. The same filtering procedure can be realized for short range communication with nearby vehicles of the fleet 3.

Data wirelessly received may originate from any wireless network the at least one attacked vehicle 1 is adapted to be connected to.

Cyber-attacks 2 can be launched when the computer system of the vehicle 1 connects to any Wi-Fi network 11 or connect to the internet using mobile data. In details, the router could be compromised and attack may originate from known Wi-Fi network or a rogue router can be put to simulate a malicious known Wi-Fi network. In that situation, a cyber-attack 2 can be launched directly to the vehicle 1 without spreading to the central system 9 or other vehicles 1.

The at least one piece of malicious data can be transmitted to the at least one attacked vehicle 1 via the short range communication protocol 5 or the long range communication protocol 7.

In some cases, the at least one piece of malicious data can come from the central system 9. The tracking and management method is therefore also adapted in case a cyber-attack 2 has infested the central system 9 and tries to spread to the fleet 9.

Thus, the short range communication protocol 5 is independent from the central system 9.

The intrusion detection and prevention system IDPS of each vehicle 1 of the fleet 3 is configured to spot and prioritize any report update received via the short range communication protocol for updating a prevention strategy of the intrusion detection and prevention system IDPS.

In other words, priority is given to the report update received from nearby vehicles 1 via the short range communication protocol 5.

Data transmitted through the central system 9 can still be considered to complete the prevention strategy implemented by other vehicles 1 of the fleet 3.

Thus, the deprioritization of centralized network communication over short range communication will take place only if the centralized server or network, the so-called central system 9, was itself sending some update at the same time when the nearby vehicle 9 is transmitting the report update through short range communication. The short-range communication gets priority over long range communication through central system 9. Communication through central system 9 acts as a backup (in queue) to the information already transmitted directly through short range communication. Any vehicle 1 of the fleet 3 having the report update can realize following steps if needed:
E3 detecting a nearby vehicle 1 according to the short range communication protocol 5 configured to exchange information with said vehicle 1 having the report update,
E4 The vehicle receiving the update will, on receiving update, check whether it has already received similar update and discard it if has already received same update. The sender will not know if the report was earlier received by receiver, it will simply broadcast)
E5 sending the report update to the nearby vehicle 1 according to the short range communication protocol 5.

The affected vehicle 5 using short range communication broadcasts the report update and, so, it will reach to not just one specific vehicle 1, rather all of them that are accessible through short range communication. It is a broadcast. Therefore, the sequence of transmitting report from first vehicle 1 to second vehicle 1 and second to third will happen only if third vehicle 1 is not reachable, through short range communication, directly from the first vehicle 1.

The discovery of the at least one piece of malicious data is realized further to a detection of an abnormal resource usage and/or abnormal network activity of the at least one vehicle 1, the abnormality being statistically determined with respect to a resource usage baseline and/or network activity baseline.

As illustrated in figure 3, each vehicle 1 of the fleet comprises a management system 13 configured to manage electronic commands of the vehicle 1 and including the intrusion detection and prevention system IDPS, a short range communication module 15 and a long range communication module 17.

The management system 13 includes a processor. The term resource usage concerns the activity of the management system 13 and the term network activity concerns the information exchange thanks to the short range communication module 15 and the long range communication module 17.

The report update contains data related to the detected abnormality, said data including a trained machine learning model, a state machine information resulting of the cyber-attack 2 and/or a list of IP addresses and ports from which the cyber-attack 2 was launched. The report update is meant to share the attack information with the other vehicles 1.

The report update would comprise of a trained Machine Learning model that can detect anomalous behaviour. The first vehicle can train a Machine Learning model to detect the attack in first vehicle and then send it to other to enable them to detect the same.

The report update would also contain a state machine information that is created by tracking the abnormal protocol states that were a result of attack and send that to other vehicles 1 to detect the attack.

The report update would also contain a list of IP addresses and port from which attack was launched on the first vehicle 1 and the system configurations that the attack leads to, and other information for easy detection of malicious data.

The step E1 of identifying the cyber-attack 2 can be followed by a protection step E20 wherein the at least one attacked vehicle 1 stops receiving at least a part of the data from where the cyber-attack 2 is launched, modifies its security preferences with regards to wirelessly received data and/or inhibits the received malicious data.

The primary preventive actions could be to block the IP address that is sending malicious code to execute or carrying out manual attack or the other way around is to block the IP Port from which attack is being launched.

The intrusion detection and prevention system IDPS can also do changes to the security environment. The intrusion detection and prevention system can change the configuration of other security controls to disrupt an attack.

The protection step E20 further includes a configuration of the at least one attacked vehicle in a limpo mode wherein displacement capabilities of the vehicle are limited.

The last resort, when all other mechanisms fail to block the attack, would be to put the vehicle 1 in limpo mode i.e. reducing the vehicle 1 to a low speed so that the even if the attacker gains control of the vehicle 1 he/she cannot cause any accident.

It is to be understood that the present invention is not limited to the embodiments described above and illustrated in the drawings; rather, the skilled person will recognize that many changes and modifications may be made within the scope of the appended claims.

## Claims

1. A tracking and management method for responding to a cyber-attack (2) directed to at least one attacked vehicle (1) of a fleet (3) including a plurality of vehicles (1), each vehicle (1) of the fleet (3) comprising an intrusion detection and prevention system (IDPS) configured to track data wirelessly received by said vehicle (1) for identifying the cyber-attack (2), the method comprising the following steps:
- (E1) identifying the cyber-attack (2) in said at least one attacked vehicle (1), the identification corresponding to the discovery, by the intrusion detection and prevention system (IDPS) of the at least one attacked vehicle (1), of at least one piece of malicious data among the wirelessly received data and the definition of a report update that characterizes said at least one piece of malicious data,
- (E2) broadcasting the report update to at least one non-attacked vehicle (1) of the fleet from the at least one attacked vehicle (1) according to a short range communication protocol (5).

2. The tracking and management method according to claim 1, wherein the step of broadcasting (E2) of the report update is realized according to a direct communication between two vehicles (1) of the fleet (3).

3. The tracking and management method according to one of the claims 1 or 2, wherein the fleet (3) includes a central system (9) configured to exchange data with said plurality of vehicles (1) according to a long range communication protocol (7), the method comprising the following steps realized after the identification step (E1) of the cyber-attack (2) by said at least one attacked vehicle (1) :
- (E11) sending the report update to the central system (9) from the at least one attacked vehicle (1) according to the long range communication protocol (7),
- (E12) further sending the report update to the plurality of vehicles (1) of the fleet from the central system (9) according to the long range communication protocol (7).

4. The tracking and management method according to claim 3, wherein the at least one attacked vehicle (1) is configured to filter data intended to be sent to the central system (9) and/or to at least one non-attacked vehicle (1) so as to exclude the unaltered at least one piece of malicious data.

5. The tracking and management method according to one of the claims 1 or 4, wherein data wirelessly received originate from any wireless network the at least one attacked vehicle (1) is adapted to be connected to.

6. The tracking and management method according to claim 5, wherein the intrusion detection and prevention system (IDPS) of each vehicle (1) of the fleet (3) is configured to spot and prioritize any report update received via the short range communication protocol (5) for updating a prevention strategy of the intrusion detection and prevention system (IDPS).

7. The tracking and management method according to one of the claims 1 to 6, wherein any vehicle (1) of the fleet having the report update realizes following steps:
- (E3) detecting a nearby vehicle (1) according to the short range communication protocol configured to exchange information with said vehicle (1) having the report update,
- (E5) sending the report update to the nearby vehicle (1) according to the short range communication protocol (5).

8. The tracking and management method according to one of the claims 1 to 7, wherein the discovery of the at least one piece of malicious data is realized further to a detection of an abnormal resource usage and/or abnormal network activity of the at least one vehicle (1), the abnormality being statistically determined with respect to a resource usage baseline and/or network activity baseline.

9. The tracking and management method according to claim 8, wherein the report update contains data related to the detected abnormality, said data including a trained machine learning model, a state machine information resulting of the cyber-attack and/or a list of IP addresses and ports from which the cyber-attack (2) was launched.

10. The tracking and management method according to one of the claims 1 to 9, wherein the step of (E1) identifying the cyber-attack is followed by a protection step (E20) wherein the at least one attacked vehicle (1) stops receiving at least a part of the data from where the cyber-attack (2) is launched, modifies its security preferences with regards to wirelessly received data and/or inhibits the received malicious data.

11. The tracking and management method according to claim 10, wherein the protection step (E20) further includes a configuration of the at least one attacked vehicle (1) in a limpo mode wherein displacement capabilities of the vehicle (1) are limited.
